# EUROPÄISCHE PATENTSCHRIFT

(11) **EP 2 260 572 B1**
(45) Veröffentlichungstag und Bekanntmachung des Hinweises auf die Patenterteilung: **02.08.2017**
(21) Anmeldenummer: 09727286.8
(22) Anmeldetag: 25.02.2009
(51) Int. Cl.: H02P 1/02

(54) **KOMPAKTES SCHALTGERÄT FÜR EINEN ELEKTRISCHEN VERBRAUCHER**
COMPACT SWITCHGEAR FOR AN ELECTRICAL CONSUMER
COMMUTATEUR COMPACT POUR CONSOMMATEUR ÉLECTRIQUE

(30) Priorität: 31.03.2008 DE 102008018254
(43) Veröffentlichungstag der Anmeldung: 15.12.2010
(73) Patentinhaber: Siemens Aktiengesellschaft, 80333 München (DE)
(72) Erfinder: GRAF, Josef, 92256 Hahnbach (DE); MITLMEIER, Norbert, 92289 Ursensollen (DE); NIEBLER, Ludwig, 93164 Laaber (DE); STREICH, Bernhard, 92224 Amberg (DE)
(86) Internationale Anmeldenummer: PCT/EP2009/052190
(87) Internationale Veröffentlichungsnummer: WO 2009/121666

(56) Entgegenhaltungen:
- DE-A1- 3 526 803
- DE-A1-102005 036 777
- DE-U- 7 141 202

## Beschreibung

Die Erfindung betrifft ein kompaktes Schaltgerät für einen elektrischen Verbraucher, insbesondere einen Motor. Das Schaltgerät, insbesondere in einer Ausführungsform als elektromagnetisches Schaltgerät, umfasst ein Netzteil und einen Antrieb mit einem Schaltelement, insbesondere einem elektromagnetischen Schaltelement, z. B. ein Schütz oder dergleichen. Das Netzteil ist in an sich bekannter Art und Weise an eine externe Versorgungsspannung anschließbar und an den Antrieb oder dessen Schaltelement ist in ebenfalls an sich bekannter Art und Weise ein externer Verbraucher, z. B. ein Motor, anschließbar. Mit dem Antrieb oder dessen Schaltelement ist eine vom Netzteil des Schaltgeräts generierte Betriebsspannung über eine vom Netzteil ausgehende Betriebsspannungsleitung dem Verbraucher über das Schaltelement zuführbar. Der jeweilige Verbraucher wird dann mit elektrischer Leistung versorgt, also aktiviert, wenn das Schaltelement angesteuert wird oder ist.

Derartige Schaltgeräte sind an sich bekannt, z. B. unter der Bezeichnung Motorstarter. Die Anmelderin der vorliegenden Erfindung bietet unter der Bezeichnung "SIRIUS Kompaktabzweig" ein auch als universeller Motorabzweig bezeichnetes Schaltgerät an, das die Vorgaben nach IEC / EN 60947-6-2 erfüllt und die Funktionen eines Leistungsschalters, eines elektronischen Überlastrelais und eines Schützes als Schaltelement in einem Gehäuse vereinigt und überall dort einsetzbar ist, wo Drehstrom-Normmotoren bis 32A (ca. 15kW / 400V) direkt gestartet werden ("Für Wirtschaftlichkeit und Zuverlässigkeit im Schaltschrank, Der SIRIUS Kompaktabzweig 3RA6", Siemens AG 2009, www.siemens.com/compactstarter). Der Kompaktabzweig ist als Direkt- oder Wendestarter erhältlich.

In einer Ausführungsform als Wendestarter zeichnet sich der Kompaktabzweig durch die folgenden Komponenten aus: Wendestarter, zwei abnehmbare Hauptleiterklemmenblöcke, zwei sechspolige abnehmbare Hilfs- und Steuerleiterklemmenblöcke, Meldeschalter "Überlast" und "Kurzschluss/Funktionsstörung" und interne Hilfsschalter sowie zwei optionale externe Hilfsschalterblöcke (zwei Schließer, zwei Öffner oder ein Schließer und ein Öffner). Zur Verriegelung der Drehrichtungen ist vorgesehen, dass die Schütze des Wendestarters gegeneinander verriegelt sind. Diese Schutzvorkehrung verhindert, dass die Schütze für die unterschiedlichen Drehrichtungen gleichzeitig angesteuert werden und einen Kurzschluss verursachen. Die Verriegelung der Schütze ist sowohl mechanisch gegen Schockbeanspruchung als auch elektrisch gegen Fehlansteuerung realisiert. Zur mechanischen Schützverriegelung ist vorgesehen, dass ein Wendeherz die Drehrichtungen mechanisch gegeneinander blockiert. Sind die Hauptkontakte für eine erste Drehrichtung geschlossen, verhindert das Wendeherz das gleichzeitige Schließen der Hauptkontakte für die andere Drehrichtung und umgekehrt. Zur elektrischen Schützverriegelung ist im Wendestarter für jede Drehrichtung ein als Öffner ausgeführter Hilfskontakt vorgesehen. Durch diese Hilfskontakte wird der Steuerstrom der jeweils anderen Drehrichtung durchgeschleift. Wenn also die Hauptkontakte für die erste Drehrichtung geschlossen sind, öffnet sich der Hilfskontakt und unterbricht den Steuerstromkreis der anderen Drehrichtung und umgekehrt. Somit ist sichergestellt, dass bei anliegender Steuerspannung für eine Drehrichtung die Hauptkontakte für die andere Drehrichtung nicht geschaltet werden.

DE7141202U beschreibt eine Einrichtung zur Spannungsversorgung von u.a. Schaltungsanordnungen, wobei in einer Ausführung das Einfachnetzteil als Doppelnetzteil für zwei Speiseeinheiten fungiert.

Bei bekannten Geräten der eingangs genannten Art besteht das Bedürfnis einer möglichst weitgehenden Funktionsintegration, d. h. das Schaltgerät soll möglichst viele bisher extern realisierte Funktionen übernehmen, bei einer gleichzeitigen Forderung nach Verringerung oder zumindest Beibehaltung des von einem solchen Schaltgerät belegten Bauraum.

Diese Aufgabe wird erfindungsgemäß mit den Merkmalen des Anspruchs 1 gelöst. Dazu ist ein Schaltgerät mit in ein gemeinsames Gehäuse integriertem Netzteil und mindestens zwei Antrieben vorgesehen, wobei das Netzteil mit einer externen Versorgungsspannung versorgbar und an die beiden Antriebe ein externer Verbraucher anschließbar ist. Dadurch, dass das Schaltgerät zwei Antriebe umfasst, ist eine Funktionalität als Wendestarter möglich, derart, dass einer der Antriebe für eine erste Drehrichtung und der komplementäre Antrieb für die entgegengesetzte Drehrichtung verwendet wird. Beide Antriebe sind neben anderen Funktionalitäten des Schaltgerätes in einem gemeinsamen Gehäuse angeordnet, so dass sich insgesamt ein kompaktes Schaltgerät ergibt, das damit zu einer Verbesserung der Einbausituation beiträgt.

Bisher wurden Wendestarter mit zwei extern aufgebauten Standardschützen mit Verriegelung zur Verhinderung des Phasenkurzschlusses, einem Überlastrelais und einem Leistungsschalter realisiert. Die Erfindung schlägt den Einbau zweier Antriebe für jeweils eine Bewegungsrichtung, also z. B. Links- bzw. Rechtslauf, inklusive Strombahnen in ein kompaktes Gehäuse vor. Bevorzugt können in das Gehäuse auch eine gemeinsame Überlasterkennung und eine gemeinsame Leistungsschalterfunktion integriert sein. Die kompakte Bauform wird ermöglicht durch eine gemeinsame elektronische Spulenansteuerung für die beiden Antriebe und bei der Ausführungsform mit gemeinsamem elektronischen Überlastrelais durch die Verwendung eines elektronischen Überlastrelais gemeinsam für beide Antriebe. Sämtliche Komponenten befinden sich auf einer Flachbaugruppe, wodurch neben einem sehr kompakten Aufbau auch eine Minimierung der Verlustleistung möglich ist. Daneben ermöglicht das Schaltgerät gemäß der Erfindung oder gemäß bevorzugter Ausführungsformen auch eine Verriegelung der beiden Antriebsrichtungen sowohl elektronisch als auch mechanisch, inklusive der notwendigen Verzögerungszeiten bei Direktumschaltung zur Vermeidung von Phasenkurzschlüssen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- FIG 1: ein kompaktes Schaltgerät gemäß der Erfindung,
- FIG 2: schematisch vereinfachte Prinzipdarstellung eines Schaltgerätes mit einer in das kompakte Schaltgerät gemäß FIG 1 integrierbaren Funktionalität,
- FIG 3: schematisch vereinfachte Prinzipdarstellung eines weiteren Schaltgerätes mit einer weiteren, in das kompakte Schaltgerät gemäß FIG 1 integrierbaren Funktionalität,
- FIG 4 bis FIG 6: Signalverläufe für in einem Eingangszweig des in FIG 3 dargestellten Schaltgeräts messbare Spannungen.

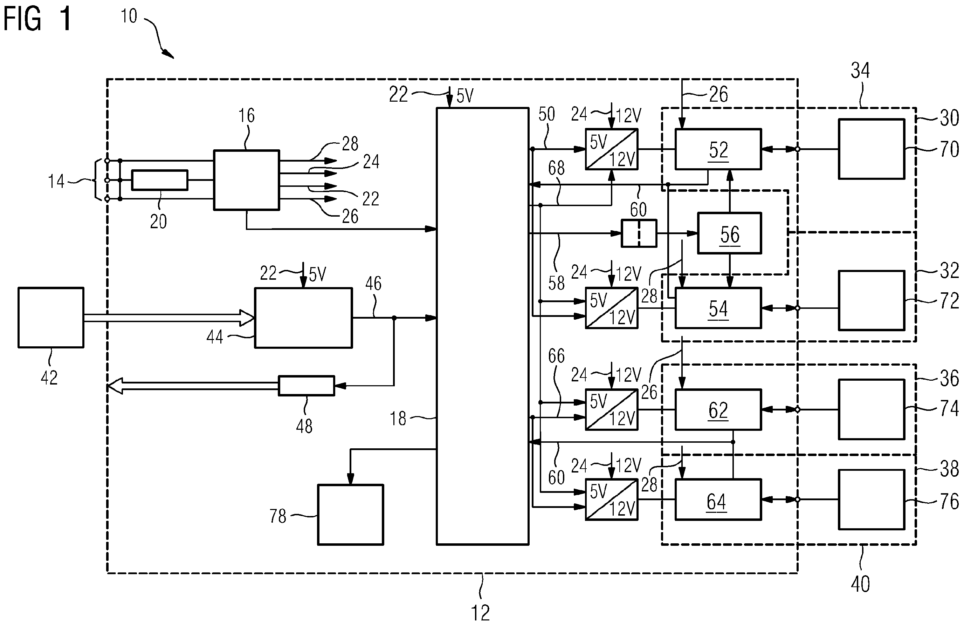

FIG 1 zeigt insgesamt mit 10 bezeichnet eine schematisch vereinfachte Darstellung eines Schaltgerätes gemäß der Erfindung in Form eines Blockdiagramms. Das Schaltgerät 10 umfasst einen Elektronikteil 12, zu dem Kontakte 14 zum Anschluss einer Versorgungsspannung, ein Netzteil 16 und eine Steuerschaltung 18 gehören, die z. B. in Form eines Controllers, z. B. eines anwenderspezifischen integrierten Schaltkreises (ASIC), FPGA, usw. implementiert ist. Zwischen den Kontakten 14 und dem Netzteil 16 ist noch ein Schaltschloss 20 vorgesehen, mit dem sich der Elektronikteil 12 vom Netz, also von der anliegenden Versorgungsspannung, abtrennen lässt. Das Netzteil 16 erzeugt aus der anliegenden externen Versorgungsspannung eine erste und zweite Betriebsspannung, 22, 24, z. B. 5V bzw. 12V. Diese erste oder zweite Betriebsspannung 22, 24 wird an anderen Stellen des Elektronikteils 12 den dortigen Komponenten zugeführt, ohne das dies durch durchgezogene Strombahnen kenntlich gemacht ist. Es wird insoweit auf die Verwendung gleicher Bezugszeichen verwiesen. Daneben erzeugt das Netzteil 16 auch eine erste und zweite Antriebsspannung 26, 28 für zwei von dem Schaltgerät 10 umfasste Antriebe 30, 32, die in einem Antriebsteil 34 zusammengefasst sind. Ebenso wie bei der ersten und zweiten Betriebsspannung 22, 24 sind für die erste und zweite Antriebsspannung 26, 28 in FIG 1 keine durchgehenden Strompfade gezeigt und es wird insoweit erneut auf die durchgängige Verwendung gleicher Bezugszeichen verwiesen. Dem ersten Antrieb 30 wird also die erste Antriebsspannung 26 und dem zweiten Antrieb 32 die zweite Antriebsspannung 28 zugeführt. Neben den beiden Antrieben 30, 32 umfasst das Schaltgerät 10 auch zwei so genannte REL-Antriebe 36, 38, die zusammen in einem REL-Antriebsteil 40 zusammengefasst sind. Dem ersten REL-Antrieb 36 wird genauso wie dem ersten Antrieb 30 die erste Antriebsspannung 26 und dem zweiten REL-Antrieb 38 entsprechend die zweite Antriebsspannung 28 zugeführt.

Zur Überlasterkennung ist einem an die Antriebe 30, 32 anschließbaren, nicht dargestellten Verbraucher, also z. B. einem Motor, ein Stromwandler 42 zugeordnet, der bei einem mit Drehstrom angetriebenen Verbraucher zur Messung der drei Phasenströme vorgesehen ist. Vom Stromwandler 42 gelieferte Messwerte werden von einer Hauptstromauswertungseinheit 44 ausgewertet und es wird im Falle einer Überschreitung eines vorgegebenen Schwellwerts ein Fehlersignal 46 erzeugt, das mittels der Steuerschaltung 18 auswertbar ist. Mit dem Fehlersignal 46 wird auch ein beiden Antrieben 30, 32 zugeordnetes Überlastmelderelais 48 angesteuert. Auf einer Ausgangsseite generiert die Steuerschaltung 18 ein insbesondere pulsweiten-moduliertes Antriebsansteuerungssignal 50. Dieses wird nach einer Spannungsumsetzung einer für jeden Antrieb 30, 32 vorgesehenen Leistungsstufe 52, 54 zugeführt. Die Leistungsstufe 52 des ersten Antriebs 30 wird dabei mit der ersten Antriebsspannung 26 beaufschlagt und die Leistungsstufe 54 des zweiten Antriebs 32 mit der zweiten Antriebsspannung 28. Beiden Leistungsstufen 52 ist ein Freilaufkreis 56 zugeordnet, der, abgesichert durch eine optische Trennung, auf ein Freilaufkreisansteuerungssignal 58 reagiert. Beide Leistungsstufen 52, 54 liefern ein Antriebsstromsignal 60 zur Steuerschaltung 18 zurück. Der REL-Antriebsteil 40 ist im Wesentlichen analog zum Antriebsteil 34 aufgebaut und es wird insoweit auf die dortige Beschreibung verwiesen. Auch der REL-Antriebsteil 40 umfasst zwei Leistungsstufen 62, 64, denen ein insbesondere pulsweiten-moduliertes REL-Ansteuerungs-signal 66 zuführbar ist. Zur gegenseitigen Verriegelung ist ein von der Steuerschaltung 18 ausgebbares Verriegelungssignal 68 vorgesehen.

Jeder Antrieb 30, 32 und auch jeder REL-Antrieb 36, 38 umfasst eine Antriebshaupteinheit 70, 72, 74, 76. Im Falle eines von der Steuerschaltung 18 aufgrund interner Verarbeitung festgestellten oder durch Eingangssignale, etwa das Fehlersignal 46 oder das Antriebsstromsignal 60, signalisierten Fehlers erfolgt die Ansteuerung einer Anzeigeeinheit 78. Den Antrieben 30, 32 und/oder den REL-Antrieben 36, 38 kann ein gemeinsamer Leistungsschalter (nicht dargestellt) zugeordnet sein, der bei Überstromfällen oder sonstigen Fehlersituationen auslöst. Ein solcher Leistungsschalter ist also gleichzeitig den jeweils zu überwachenden Hauptstrombahnen zugeordnet und löst aus, wenn in einer der Hauptstrombahnen eine Überstromsituation vorliegt.

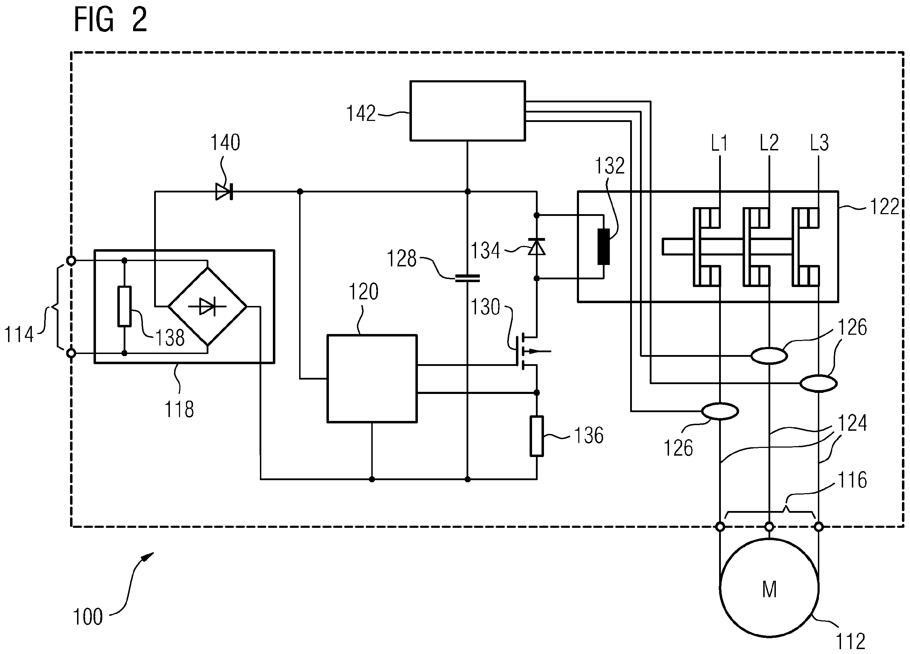

Das Schaltgerät 10 kann für bevorzugte Ausführungsformen um eine Funktionalität ergänzt werden, wie sie in FIG 2 dargestellt ist, dort allerdings nur für einen Antrieb.

FIG 2 zeigt schematisch vereinfacht ein elektrisches Schaltgerät 100 zur Steuerung eines daran angeschlossenen Verbrauchers 112, z. B. eines Motors M. Das Schaltgerät 100 umfasst einen Eingang 114, einen Ausgang 116, ein Netzteil 118, eine Steuerschaltung 120 und ein Schaltelement 122. Im Betrieb des Schaltgerätes 100 ist dem Netzteil 118 über den Eingang 114 eine externe Versorgungsspannung zuführbar. Durch die dem Netzteil 118 nachgeordnete Steuerschaltung 120 ist das Schaltelement 122 aktivierbar. Mit dem Schaltelement 122 ist dem an den Ausgang 116 angeschlossenen Verbraucher 112 über Versorgungsspannungsleitungen 124 eine Versorgungsspannung zuführbar. Das Schaltelement 122 ist entweder ein elektromechanisches Schaltelement, also z. B. ein Schütz oder dergleichen, oder ein elektronisches Schaltelement, also z. B. ein Transistor, Thyristor oder ähnliches. Zumindest einer Versorgungsspannungsleitung 114 ist ein Wandler 126 zugeordnet, der im Betrieb des Schaltgerätes 100 zur Ladung eines der Steuerschaltung 122 nachgeordneten Pufferkondensators 128 wirksam ist. In der Figur dargestellt ist eine Ausführungsform, bei der jeder Versorgungsspannungsleitung 124 genau ein Wandler 126 zugeordnet ist.

Die Steuerschaltung 120 ist zwischen zwei Ausgängen des Netzteils 118 angeschlossen. Der Pufferkondensator 128 ist parallel zur Steuerschaltung 120 angeschlossen. Dadurch bewirkt der Pufferkondensator 128 einerseits eine Stabilisierung einer vom Netzteil 118 erzeugten Betriebsspannung und andererseits ergeben sich für die Steuerschaltung 120, die auf die Betriebsspannung reagiert, verkontinuierlichte Randbedingungen aufgrund der geglätteten oder stabilisierten Betriebsspannung.

Durch die Steuerschaltung 120 ist ein Schalter 130 ansteuerbar, der im Betrieb im angesteuerten Zustand eine Ansteuerung des Schaltelements 122 bewirkt. Dadurch, dass der Pufferkondensator 128 auch parallel zu diesem Schalter 130 angeschlossen ist, bewirkt der Pufferkondensator 128 auch eine Stabilisierung eines über den Schalter 130 im angesteuerten Zustand fließenden Stroms. In Reihe mit dem Schalter 130, der als Transistor, also elektronisch aktivierbarer Schalter dargestellt ist, ist eine zur Aktivierung des Schaltelements 122 vorgesehene Induktivität 132 geschaltet. Der Pufferkondensator 128 ist auch parallel zu dieser Reihenschaltung aus Schalter 130 und Induktivität 132 angeschlossen. Parallel zu der Induktivität 132 ist eine Freilaufdiode 134 vorgesehen, die in an sich bekannter Art und Weise als Schutz vor einer Überspannung beim Abschalten der Induktivität 132 dient. In Reihe mit dem Schalter 130 und der Parallelschaltung aus Induktivität 132 und Freilaufdiode 134 befindet sich ein Vorwiderstand 136. Weitere Details der Schaltung des elektrischen Schaltgerätes 100 sind ein Eingangswiderstand 138 und eine Entkoppeldiode 140.

Zwischen dem oder jedem Wandler 126 und dem Pufferkondensator 128 ist eine Wandlerverarbeitung 142 angeordnet. Die Wandlerverarbeitung 142 wandelt von einem oder mehreren Wandlern 126 erhaltene Ströme oder Spannungen so um, dass ausschließlich eine Aufladung des Pufferkondensators 128 erfolgt. Im Falle von nur einem Wandler 126 kann dies z. B. eine Gleichrichtung empfangener Spannungen oder Ströme sein. Im Falle von drei Versorgungsleitungen 124, wie dargestellt, zum Anschluss einer Drehstromlast, also z. B. eines Motors M als Verbraucher 112, wirkt die Wandlerverarbeitung 142 derart, dass im Betrieb aus den von den Wandlern 126 gelieferten, phasenverschobenen Spannungen ein Strom ausschließlich zur Ladung des Pufferkondensators 128 erzeugt wird.

Bei einer Übernahme der in FIG 2 für das Schaltgerät 100 gezeigten Funktionalität, namentlich die Verwendung des oder jedes dort gezeigten Wandlers 126 zur Ladung des Pufferkondensators 128, ist der Steuerschaltung 18 (FIG 1) ein Pufferkondensator zugeordnet, wie dies in FIG 2 mit dem Pufferkondensator 128 für die dortige Steuerschaltung 20 gezeigt ist. Der oder jeder Wandler 126 ist einem an die beiden Antriebe 30, 32 als Verbraucher angeschlossenen Motor zugeordnet und das Aufladen des Pufferkondensators 128 über den oder jeden Wandler 126 erfolgt mit einer der Wandlerverarbeitung 142 (FIG 2) entsprechenden Funktionseinheit.

Bei Integration der Funktionalität des Schaltgeräts 100 gemäß FIG 2 in das in FIG 1 dargestellte Schaltgerät 10, ergibt sich also ein Schaltgerät, bei dem die Ladung eines Pufferkondensators 128 über eine oder mehrere, hier als Versorgungsspannungsleitung 124 bezeichnete Hauptstrombahnen, erfolgt. Zur definierten, gesteuerten Ladung des Pufferkondensators 128 ist die Wandlerverarbeitung 142 vorgesehen. Bei einem Schaltgerät 10; 100 mit einer derartigen Schaltung erzeugt der Pufferkondensator 128 auf der Versorgungsseite keine Ladestromspitzen. Das Versorgungsnetz wird damit nicht belastet und der EMV-Beschaltungsaufwand wird reduziert. Durch die Pufferung wirken sich etwa von einem Schaltnetzteil umfasste getaktete Spulen EMV-mäßig unkritisch aus. Es werden also Ladeströme ebenso wie gepulste Ströme über den Pufferkondensator 128 abgefangen. Durch den ständigen Stromnachfluss in den Pufferkondensator 128 wird auch eine Reduktion der durch das Netzteil 118 aufzubringenden elektrischen Energie erreicht.

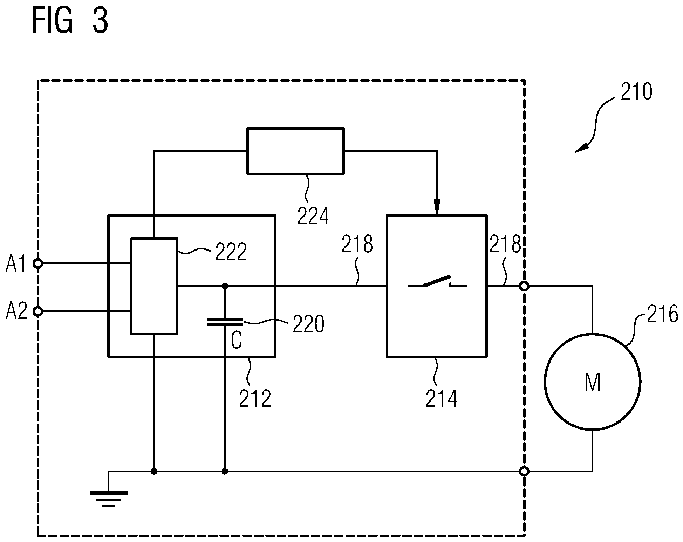

FIG 3 zeigt eine Ausführungsform eines Schaltgerätes 210 mit einem Antrieb, bei dem zum Abschalten eines daran anschließbaren Verbrauchers 216, z. B. eines Motors M, dieser kurzzeitig aus einem elektrischen Energiespeicher 220 bestromt wird. Durch das kurzzeitige Anschalten des jeweiligen Verbrauchers 216 wird ein zur Verbesserung von EMV-Eigenschaften vorgesehener, einem Netzteil 212 zugeordneter Energiespeicher 220 entladen, so dass eine Spannungsauswertung beim Abschalten des Verbrauchers durch eine etwaige Ladung des Energiespeichers 220 nicht ungünstig beeinflusst wird.

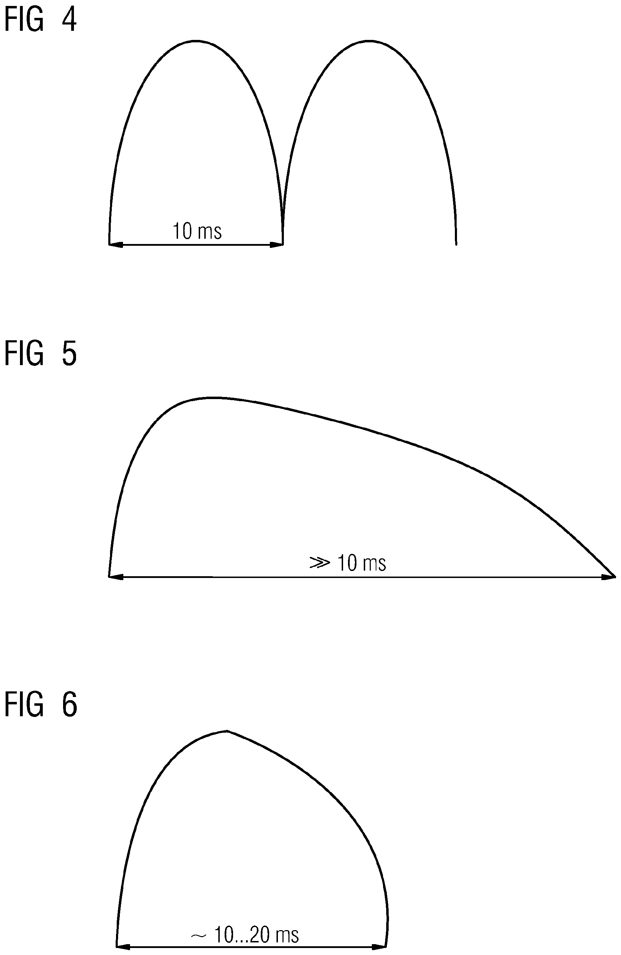

Entweder der Wandler 222 und/oder die Steuerschaltung 224 führen eine Auswertung der externen Versorgungsspannung aus. Dazu werden als Spannungsauswertung über einen definierten Zeitraum Daten bezüglich der an die Klemmen A1, A2 anschließbaren externen Versorgungsspannung gesammelt und ein Mittelwert berechnet. Zusätzlich wird eine Entscheidung getroffen, ob als externe Versorgungsspannung eine Wechselspannung oder ein Gleichspannung anliegt. Spitzenwerte sind bei Wechselspannung bekanntlich höher als bei Gleichspannung. Liegt als externe Versorgungsspannung z. B. eine Wechselspannung an, wird diese durch den Wandler 222 gleichgerichtet, wie FIG 4 zeigt.

Wenn die externe Versorgungsspannung abgeschaltet wird, entlädt sich der Energiespeicher 220, also im dargestellten Fall der Kondensator C, und für die Spannungsauswertung kann sich eine Signalform ergeben, wie diese in FIG 5 dargestellt ist. Bei einer solchen Signalform wird der Mittelwert derart verfälscht, dass durch die Spannungsauswertung eine zu hohe Spannung erkannt wird. Wegen fehlender Nulldurchgänge kann es auch dazu kommen, dass eine falsche Spannungsart angenommen wird, hier z. B. Gleichspannung. Aufgrund solcher Fehlauswertungen kann es dazu kommen, dass der Verbraucher 216 ungewollt wieder zugeschaltet wird.

Um dies zu vermeiden, ist vorgesehen, dass beim Abschalten des Verbrauchers 216, also bei Wegnahme der externen Versorgungsspannung, dieser gesteuert durch Aktivierung des Schaltelements 214 kurzzeitig aus der im elektrischen Energiespeicher 220 gespeicherten Energie bestromt wird. Dadurch wird der Energiespeicher 220 definiert und kontrolliert entladen, so dass sich für die Spannungsauswertung ein Signal ergibt, wie dies exemplarisch in FIG 6 dargestellt ist. Der Energiespeicher 220 wird also sehr viel schneller entladen, als dies bei der in FIG 5 dargestellten Situation der Fall ist. Fehlerhafte Spannungsauswertungen sind damit wirksam verhindert oder zumindest reduziert.

Für eine gesteuerte und definierte Entladung des Energiespeichers 220 ist vorgesehen, dass das kurzzeitige Bestromen des jeweiligen Verbrauchers 216 aus der im Energiespeicher 220 verbliebenen elektrischen Restenergie während einer vorgegebenen oder vorgebbaren Entladezeit erfolgt. Diese ist insbesondere auf eine Speicherkapazität des Energiespeichers 220 und eine Trägheit des Verbrauchers 216 abgestimmt, derart, dass der Energiespeicher 220 ausreichend entladen und der Verbraucher 216, wenn überhaupt, nur unmerklich in Betrieb gesetzt wird. Bei einem Motor M als Beispiel für einen Verbraucher 216 ist bei einer ausreichend kurzen Bestromung - also einer ausreichend kurzen Entladezeit, während derer eine solche Bestromung erfolgt - aufgrund der Massenträgheit der involvierten beweglichen Komponenten keine unerwünschte Bewegung zu besorgen. Das kurzzeitige Bestromen des jeweiligen Verbrauchers 216 erfolgt im Anschluss an eine vorgegebene oder vorgebbare Wartezeit nach Wegnahme der externen Versorgungsspannung. Die Steuerschaltung 224 umfasst dazu Hardware- und/oder Softwaremittel zur Implementation des beschriebenen Verfahrens. Insbesondere sind dafür die Warte- und Entladezeit in der Steuerschaltung 224 codiert. Mittels der Steuerschaltung 224 wird nach Abschalten des Verbrauchers 216 durch Wegnahme der externen Versorgungsspannung das Verstreichen der Wartezeit abgewartet und nach Verstreichen der Wartezeit der Verbraucher 216 für die Dauer der Entladezeit bestromt, so dass der Energiespeicher 220 entladen oder zumindest ausreichend entladen wird.

Der in FIG 3 für das dortige Netzteil 212 gezeigte Energiespeicher 220 kann in das Netzteil 16 des Schaltgerätes 10 gemäß FIG 1 integriert sein. Die Funktionalität der in FIG 3 dargestellten Steuerschaltung 224 ist in die Steuerschaltung 18 gemäß FIG 1 integriert und das in FIG 3 als von der Steuerschaltung 224 generierbar gezeigte Signal wirkt unmittelbar auf den ersten oder zweiten Antrieb 30, 32, namentlich ein davon umfasstes Schaltelement nach Art des in FIG 3 dargestellten Schaltelements 214. Durch die kurzzeitige Aktivierung einer der Antriebe 30, 32 gelingt die sichere Entladung eines dem Netzteil 16 zugeordneten Pufferkondensators 128 (vgl. FIG 3: Bezugszeichen 220). Darüber hinaus gelingt eine von etwaigen Restladungen des Pufferkondensators 128 unbeeinflusste Auswertung der externen Versorgungsspannung. Die Verwendung oder Verwendbarkeit eines Pufferkondensators 128 erlaubt schließlich eine Verbesserung von EMV-Eigenschaften des Schaltgerätes 10 (FIG 1).

Damit lässt sich die Erfindung kurz wie folgt darstellen:
Es wird ein elektrisches Schaltgerät 100 angegeben, bei dem die Ladung eines Pufferkondensators 128 über eine oder mehrere, hier als Versorgungsspannungsleitung 124 bezeichnete Hauptstrombahnen, erfolgt. Zur definierten, gesteuerten Ladung des Pufferkondensators 128 ist eine Wandlerverarbeitung 142 vorgesehen. Bei einem Schaltgerät 100 mit einer derartigen Schaltung erzeugt der Pufferkondensator 128 auf der Versorgungsseite keine Ladestromspitzen. Das Versorgungsnetz wird damit nicht belastet und der EMV-Beschaltungsaufwand wird reduziert. Durch die Pufferung wirken sich etwa von einem Schaltnetzteil umfasste getaktete Spulen EMV-mäßig unkritisch aus. Es werden also Ladeströme ebenso wie gepulste Ströme über den Pufferkondensator 128 abgefangen. Durch den ständigen Stromnachfluss in den Pufferkondensator 128 wird auch eine Reduktion der durch das Netzteil 118 aufzubringenden elektrischen Energie erreicht.

Mit Schaltgeräten 210 der hier beschriebenen Art, insbesondere Niederspannungsschaltgeräten, lassen sich Strombahnen, also z. B. die oder jede hier beschriebene Betriebsspannungsleitung 218, zwischen einer elektrischen Versorgungseinrichtung und Verbrauchern 216, und damit deren Betriebsströme schalten. D.h., indem vom Schaltgerät 210, insbesondere mittels eines davon umfassten Schaltelements 214, Strombahnen geöffnet werden, lassen sich die angeschlossenen Verbraucher 216 sicher ein- und ausschalten. Ein elektrisches Niederspannungsschaltelement 214, wie beispielsweise ein Schütz, ein Leistungsschalter, ein Kompaktstarter usw., weist zum Schalten der Strombahnen einen oder mehrere Hauptkontakte auf, die von einem oder auch mehreren Steuermagneten mittels einer dafür vorgesehenen Steuerschaltung 224 gesteuert werden können. Zur Vermeidung fehlerhafter Spannungsauswertungen im Bereich eines Netzteils 212 bei gleichzeitigem Erhalt einer ausreichenden elektromagnetischen Verträglichkeit wird ein aus EMV-Gesichtspunkten vorgesehener elektrischer Energiespeicher 220, insbesondere ein Kondensator, dadurch gesteuert entladen, dass beim Abschalten des jeweiligen Verbrauchers 216 dieser durch gesteuerte Aktivierung des Schaltelements 214 kurzzeitig aus der im Energiespeicher 220 noch gespeicherten Energie bestromt wird.

Bei Integration der Funktionalität des Schaltgeräts 200 gemäß FIG 3 in das in FIG 1 dargestellte Schaltgerät 10, ergibt sich ein Schaltgerät, mit dem sich Strombahnen, also z. B. die oder jede hier beschriebene Betriebsspannungsleitung 218, zwischen einer elektrischen Versorgungseinrichtung und Verbrauchern 216, und damit deren Betriebsströme schalten lassen. D.h., indem vom Schaltgerät 10; 200, insbesondere mittels einem davon umfassten Schaltelement 14, Strombahnen geöffnet werden, lassen sich die angeschlossenen Verbraucher 216 sicher ein- und ausschalten. Ein elektrisches Niederspannungsschaltelement 14, wie beispielsweise ein Schütz, ein Leistungsschalter, ein Kompaktstarter usw., weist zum Schalten der Strombahnen einen oder mehrere Hauptkontakte auf, die von einem oder auch mehreren Steuermagneten mittels einer dafür vorgesehenen Steuerschaltung 18; 224 gesteuert werden können. Zur Vermeidung fehlerhafter Spannungsauswertungen im Bereich eines Netzteils 16; 212 bei gleichzeitigem Erhalt einer ausreichenden elektromagnetischen Verträglichkeit wird ein aus EMV-Gesichtspunkten vorgesehener elektrischer Energiespeicher 220, insbesondere ein Kondensator, dadurch gesteuert entladen, dass beim Abschalten des jeweiligen Verbrauchers 216 dieser durch gesteuerte Aktivierung des Schaltelements 14 kurzzeitig aus der im Energiespeicher 20 noch gespeicherten Energie bestromt wird.

Zusammenfassend lässt sich damit die Erfindung kurz wie folgt beschreiben: Schaltgerät 10 mit in ein gemeinsames Gehäuse integriertem Netzteil 16 und mindestens zwei Antrieben 30, 32, wobei das Netzteil 16 mit einer externen Versorgungsspannung versorgbar und an die beiden Antriebe 30, 32 ein externer Verbraucher anschließbar ist, wobei insbesondere von dem Gerät 10 im gleichen Gehäuse eine integrierte Überlasterkennung 42 für beide Antriebe 30, 32 und/oder eine integrierte Leistungsschalterfunktion für beide Antriebe 30, 32 und oder eine integrierte Steuerschaltung 18 zur gemeinsamen Ansteuerung beider Antriebe 30, 32 umfasst ist, und wobei das Gerät 10 optional mit einem Wandler 126 um eine Funktionalität zur gezielten Ladung eines Pufferkondensators 128 und/oder mit einem Energiespeicher 220 um eine Funktionalität für dessen gezielte Entladung durch kurzzeitiges Bestromen eines angeschlossenen Verbrauchers 216 ergänzt werden kann.

## Patentansprüche

1. Schaltgerät (10) mit in ein gemeinsames Gehäuse integriertem Netzteil (16) und mindestens zwei Antriebsschaltelementen (30, 32), wobei das Netzteil (16) mit einer externen Versorgungsspannung versorgbar und an die beiden Antriebschaltelemente (30, 32) ein externer Verbraucher anschließbar ist, **dadurch gekennzeichnet dass**,
eine für beide Antriebsschaltelemente (30, 32) gemeinsame Überlasterkennung (42),
eine für beide Antriebsschaltelemente (30, 32) gemeinsame Leistungsschalterfunktion, und
eine zur gemeinsamen Ansteuerung für beide Antriebsschaltelemente (30, 32) geeignete Steuerschaltung (18) ebenfalls in das Gehäuse integriert sind.

## Claims

1. Switchgear device (10) comprising a power supply unit (16) integrated into a common housing, and comprising at least two drive switching elements (30, 32), wherein the power supply unit (16) can be supplied with an external supply voltage and an external load can be connected to the two drive switching elements (30, 32), **characterized in that** an overload identification system (42) common to both drive switching elements (30, 32),
a circuit-breaker function common to both drive switching elements (30, 32), and
a control circuit (18) suitable for common driving for both drive switching elements (30, 32)
are likewise integrated into the housing.

## Revendications

1. Commutateur (10) comportant, intégrés dans un boîtier commun, un bloc d'alimentation (16) et au moins deux éléments commutateurs de commande (30, 32), le bloc d'alimentation (16) pouvant être alimenté par une tension d'alimentation externe et un consommateur externe pouvant être connecté aux deux éléments commutateurs de commande (30, 32), **caractérisé en ce que**
une détection de surcharge (42) commune aux deux éléments commutateurs de commande (30, 32),
une fonction de disjoncteur commune aux deux éléments commutateurs de commande (30,32), et
un circuit de commande (18) apte à assurer la commande commune des deux éléments commutateurs de commande (30, 32) sont également intégrés dans le boîtier.
